# EUROPEAN PATENT SPECIFICATION

(11) **EP 2 215 179 B1**
(45) Date of publication and mention of the grant of the patent: **08.08.2012**
(21) Application number: 08863052.0
(22) Date of filing: 23.10.2008
(51) Int. Cl.: C09K 8/66, C09K 8/516, C09K 8/68, C09K 8/80

(54) **NANO-SIZED PARTICLES FOR FORMATION FINES FIXATION**
NANOPARTIKEL ZUR FORMUNG EINER FEINFIXIERUNG
PARTICULES NANOMÉTRIQUES POUR LA FIXATION DE FINES DE FORMATIONS

(30) Priority: 31.10.2007 US 931706
(43) Date of publication of application: 11.08.2010
(73) Proprietor: Baker Hughes Incorporated, Houston, TX 77210 (US)
(72) Inventor: HUANG, Tianping, Spring TX 77388 (US); CREWS, James B., Willis TX 77318 (US); WILLINGHAM, John R., Cypress TX 77429 (US); BELCHER, Christopher K., Houston TX 77065 (US)
(74) Representative: Hoffmann, Benjamin
(86) International application number: PCT/US2008/080852
(87) International publication number: WO 2009/079092

(56) References cited:
- WO-A-2008/036812
- US-A- 5 518 996
- US-A1- 2005 107 265

## Description

### TECHNICAL FIELD

The present invention relates to methods and compositions for fixating formation fines from migrating during hydrocarbon recovery operations, and more particularly relates, in one non-limiting embodiment, to methods and compositions for fixating formation fines in subterranean formations from migrating during hydrocarbon recovery operations using nano-sized particles.

### BACKGROUND

The migration of fines involves the movement of fine clay and/or non-clay particles (*e.g*. quartz, amorphous silica, feldspars, zeolites, carbonates, salts and micas) or similar materials within a subterranean reservoir formation due to drag and other forces during production of hydrocarbons or water. Fines migration may result from an unconsolidated or inherently unstable formation, or from the use of an incompatible treatment fluid that liberates fine particles. Fines migration may cause the very small particles suspended in the produced fluid to bridge the pore throats near the wellbore, thereby reducing well productivity. Damage created by fines is typically located within a radius of about 3 to 5 feet (about 1 to 2 meters) of the wellbore, and may occur in gravel-pack completions and other operations.

Fines migration is a complex phenomenon governed largely by mineralogy, permeability, salinity and pH changes, as well as drag forces created by flow velocity, turbulence and fluid viscosity, as described in detail in J. Hibbeler, et al., "An Integrated Long-Term Solution for Migratory Fines Damage," SPE 81017, SPE Latin American and Caribbean Petroleum Engineering Conference, Port-of-Spain, Trinidad, West Indies, 27-30 April 2003.
The authors note that mobilization of fines can severely damage a well's productivity, and that fines damage is a multi-parameter, complex issue that may be due to one or more of the following downhole phenomena: (1) high flow rates, particularly abrupt changes to flow rates; (2) wettability effects, (3) ion exchange; (4) two-phase flow, particularly due to turbulence that destabilize fines in the near-wellbore region; and (5) acidizing treatments of the wrong type or volume which can cause fines.

J. Hibbeler, et al. note that fines, especially clays, tend to flow depending on their wettability, and since fines are typically water-wet, the introduction of water may trigger fines migration. However, they note that clay particles may become oil-wet or partially oil-wet, due to an outside influence, and thus the fines and clay particles may become attracted to and immersed in the oil phase. The authors also note that all clays have an overall negative charge and that during salinity decrease, pH increases in-situ due to ion exchange. A pH increase may also be induced via an injected fluid. As pH increases, surface potential of fines increases until de-flocculation and detachment occurs, aggravating fines migration.
US 2005/0107265 discloses a method of treating a subterranean formation using a suspension of colloidal particles.
US 5,518,996 discloses a method of treating a subterranean formation using a high-solids fluid comprising at least three sizes of solid particulate material.

Fines fixation has become troublesome during oil and gas production and during many oil and gas recovery operations, such as acidizing, fracturing, gravel packing, and secondary and tertiary recovery procedures. Hydraulic fracturing is a method of using pump rate and hydraulic pressure to fracture or crack a subterranean formation. Once the crack or cracks are made, high permeability proppant, relative to the formation permeability, is pumped into the fracture to prop open the crack. When the applied pump rates and pressures are reduced or removed from the formation, the crack or fracture cannot close or heal completely because the high permeability proppant keeps the crack open. The propped crack or fracture provides a high permeability path connecting the producing wellbore to a larger formation area to enhance the production of hydrocarbons.

It would be desirable if methods and/or compositions would be devised to help fix or stabilize fines within a subterranean formation so that their migration is reduced, inhibited or eliminated.

### SUMMARY

There is provided, in one form, a method for treating a subterranean formation that includes introducing into the subterranean formation a treating fluid that contains a base fluid (which may be an oil base fluid, an aqueous base fluid, or an alcohol base fluid) and from 2 to 300 pptg (0.24 to 36 kg/1000 litres) based on the treating fluid of a particulate additive. The particulate additive has a mean particle size of 100 nm or less, and is selected from an alkaline earth metal oxide, alkaline earth metal hydroxide, alkali metal oxide, alkali metal hydroxide, transition metal oxide, transition metal hydroxide, post-transition metal oxide, post-transition metal hydroxide, piezoelectric crystals, pyroelectric crystals, and mixtures thereof. The particulate additive is associated with the fines within the formation; the method reducing migration of fines by fixing them in place.

There is additionally provided in another non-limiting embodiment a treating fluid that contains a base fluid and from 2 to 300 pptg (0.24 to 36 kg/1000 litres) based on the treating fluid of a particulate additive to reduce fines migration. The particulate additive having a mean particle size of 100 nm or less and may be an alkaline earth metal oxide, alkaline earth metal hydroxide, alkali metal oxide, alkali metal hydroxide, transition metal oxide, transition metal hydroxide, post-transition metal oxide, post-transition metal hydroxide, piezoelectric crystals, pyroelectric crystals, and mixtures thereof, where the transition metal is selected from titanium and zinc, and the post transition metal is selected from gallium, indium, thallium, lead and bismuth.

The particulate additives, also referred to herein as nano-sized particles or nanoparticles (*e.g*. MgO and/or Mg(OH)₂, and the like), appear to fixate or flocculate dispersed fines, such as clay and non-clay particles, including charged and non-charged particles. Due to at least in part to their small size, the surface forces (like van der Waals and electrostatic forces) of nanoparticles help them associate, group or flocculate the fines together in larger collections, associations or agglomerations. Such groupings or associations help fix the fines in place and keep them from moving. In many cases, fines fixing ability of the treating fluids may be improved by use of nano-sized particulate additives that may be much smaller than the pores and pore-throat passages within a hydrocarbon reservoir, thereby being non-pore plugging particles that are less damaging to the reservoir permeability than the fines themselves. This smaller size permits the nanoparticles to readily enter the formation, and then bind up or fix the fines in place so that both the fines and the nanoparticles remain in the formation and do not travel as far - or at least are restrained to the point that damage to the near-wellbore region of the reservoir is minimized.

The addition of alkaline earth metal oxides, such as magnesium oxide; alkaline earth metal hydroxides, such as calcium hydroxide; transition metal oxides, such as titanium oxide and zinc oxide; transition metal hydroxides; post-transition metal oxides; post-transition metal hydroxides; piezoelectric crystals and/or pyroelectric crystals such as ZnO and AlPO₄, to an aqueous fluid, or solvent-based fluid such as glycol, or oil-base fluid which is then introduced into a subterranean formation is expected to prevent or inhibit or fixate troublesome fines in the subterranean formation, and prevent or minimize the damage they may cause to the formation permeability.

### BRIEF DESCRIPTION OF THE DRAWINGS

FIG. 1A is a photograph of beaker of tap water that serves as a baseline for FIG. 1B;

FIG. 1B is a photograph showing the beaker of tap water of FIG. 1A after the addition of 0.1 %by weight (bw) 35 nanometer (nm) MgO particles;

FIG. 2A is a photograph of a beaker containing a negatively charged colloidal silica diluted with tap water;

FIG. 2B is a photograph of the beaker of FIG. 2A containing the negatively charged colloidal silica and 0.1 %bw 35 nm MgO particles showing that the silica was fixated by the nano-sized MgO at the bottom wall of the beaker;

FIG. 3A is a photograph of a beaker containing a positively charged colloidal silica diluted with tap water;

FIG. 3B is a photograph of the beaker of FIG. 3A containing the positively charged colloidal silica and 0.1%bw 35 nm MgO particles showing that the silica was fixated by the nano-sized MgO at the bottom wall of the beaker;

FIG. 4A is a photograph of a beaker containing a non-charged colloidal silica diluted with tap water;

FIG. 4B is a photograph of the beaker of FIG. 4A containing the non-charged colloidal silica and 0.1 %bw 35 nm MgO particles showing that the silica was fixated by the nano-sized MgO at the bottom wall of the beaker;

FIG. 5A is a photograph of a beaker containing 1.33 %bw natural bentonite particles dispersed in water after 24 hours of no stirring showing small particles like colloidal particles are dispersed in the water;

FIG. 5B is a photograph of the beaker containing the same fluid composition of FIG. 5A except the addition of 0.1 %bw 35 nm MgO particles and after 24 hours of no stirring showing that the small particles are flocculated by the nanoparticles at the water surface;

FIG. 6A is a photograph of the same beaker as in FIG. 5A showing that the relatively larger particles have precipitated like a cake at the bottom of the beaker;

FIG. 6B is a photograph of the same beaker of FIG. 5B after the addition of 0.1 %bw 35 nm MgO particles and after 24 hours of no stirring showing that the large particles are flocculated and kept from precipitating as in FIG. 6A; and

FIG. 7 is a particle size distribution (PSD) of the particles in FIGS. 5A and 6A.

### DETAILED DESCRIPTION

Fines fixation has been troublesome during oil and gas production, as well as during many oil and gas recovery operations including, but not necessarily limited to, acidizing, fracturing, gravel packing, secondary and tertiary recovery operations, and the like. As discussed in SPE 81017 referred to above, most of the fines that migrate and cause damage have a charge, and all clay particles generally have an overall negative charge. As defined herein, fines are particles having a particle size less than 37 microns (µm).

It has been discovered that nano-sized particles like magnesium oxide (MgO) may be used to fixate formation fines such as clay and quartz in subterranean hydrocarbon formations to inhibit, restrain or prevent them from migrating to near-wellbore regions to choke or damage the production of hydrocarbons. Some nano-sized particles, also called nanoparticles herein, not only have high surface areas compared to their small sizes, but also have relatively high surface charges that permit them to associate or connect other particles together, including other charged particles, but also other non-charged particles. In one non-limiting embodiment, these associations or connections between the fines and the nano-sized particles are due to electrical attractions and other intermolecular forces or effects.

As will be shown, laboratory tests have demonstrated that relatively small amounts of MgO nanoparticles can fixate and flocculate dispersed clay particles, and charged and non-charged colloidal silicas. Other nanoparticles such as ZnO, TiO₂,
and pyroelectric and piezoelectric crystals may also be used in the methods and compositions herein.

The nanoparticles may be pumped with a carrier fluid downhole deep within the formation to fixate fines. Optionally, these nanoparticles may be coated on proppant or sand at the surface or during placement downhole for frac-pack and gravel pack applications to fixate formation fines during these procedures.

Nano-sized particles of alkaline earth metal oxides, alkaline earth metal hydroxides, alkali metal oxides, alkali metal hydroxides, transition metal oxides, transition metal hydroxides, post-transition metal oxides, and post-transition metal hydroxides, piezoelectric crystals, pyroelectric crystals, and mixtures thereof have been discovered to have particular advantages for fixating fines and inhibiting or preventing their undesired migration, rather than allowing them to damage production of the near-wellbore region of the reservoir.

Magnesium oxide particles and powders have been suitably used to fixate fines herein. However, it will be appreciated that although MgO particles are noted throughout the description herein as one representative or suitable type of alkaline earth metal oxide and/or alkaline earth metal hydroxide particle, other alkaline earth metal oxides and/or alkaline earth metal hydroxides and/or transition metal oxides, transition metal hydroxides, post-transition metal oxides, and post-transition metal hydroxides, piezoelectric crystals, pyroelectric crystals, may be used in the methods and compositions herein. Additionally, the alkali metal oxides and/or hydroxides may be used alone or in combination with the alkaline earth metal oxides and hydroxides, and/or together with one or more transition metal oxide, transition metal hydroxide, post-transition metal oxide, post-transition metal hydroxide, piezoelectric crystal, and pyroelectric crystal.

By "post-transition metal" is meant one or more of gallium, indium, thallium, lead and bismuth. In another non-limiting embodiment herein, the nano-sized particles are oxides and hydroxides of elements of Groups IA, IIA, IVA, IIB and IIIB of the previous IUPAC American Group notation. These elements include, but are not necessarily limited to, Na, K, Mg, Ca, Ti, Zn and/or Al.

The nano-sized particulate additives herein may also be piezoelectric crystal particles (which include pyroelectric crystal particles). Pyroelectric crystals generate electrical charges when heated and piezoelectric crystals generate electrical charges when squeezed, compressed or pressed.

In one non-limiting embodiment, specific suitable piezoelectric crystal particles may include, but are not necessarily limited to, ZnO, berlinite (AlPO₄), lithium tantalate (LiTaO₃), gallium orthophosphate (GaPO₄), BaTiO₃, SrTiO₃, PbZrTiO₃, KNbO₃. LiNbO₃, LiTaO₃, BiFeO₃, sodium tungstate, Ba₂NaNb₅O₅, Pb₂KNb₅O₁₅, potassium sodium tartrate, tourmaline, topaz and mixtures thereof. The total pyroelectric coefficient of ZnO is -9.4 C/m²K. ZnO and these other crystals are generally not water soluble.

In one non-limiting explanation, when the aqueous carrier fluid mixed with very small pyroelectric crystals, such as nano-sized ZnO, is pumped downhole into underground formations that are under high temperature and/or pressure, the pyroelectric crystals are heated and/or pressed and high surface charges are generated. These surface charges permit the crystal particles to associate, link, connect or otherwise relate the formation fines together to fixate them together and also to the surrounding formation surfaces. The association or relation of the fines is thought to be very roughly analogous to the crosslinking of polymer molecules by crosslinkers, in one non-limiting image. No formation damage is expected from the use of the nano-sized particulate additives.

In one non-limiting embodiment, the nano-sized solid particulates and powders useful herein include, but are not necessarily limited to, slowly watersoluble alkaline earth metal oxides or alkaline earth metal hydroxides, or mixtures thereof. In one non-limiting embodiment, the alkaline earth metal in these additives may include, but are not necessarily limited to, magnesium, calcium, barium, strontium, combinations thereof and the like. In one non-limiting embodiment, MgO may be obtained in high purity of at least 95 wt%, where the balance may be impurities such as Mg(OH)₂, CaO, Ca(OH)₂, SiO₂, Al₂O₃, and the like.

In another non-limiting embodiment, the particle size of the additives and agents ranges between about 4 nanometers independently up to about 100 nanometer. In another non-restrictive version, the particles may have a mean particle size of about 90 nm or less, and in another possible version about 50 nm or less, alternatively 40 nm or less.

The amount of nano-sized particles in the aqueous fluid ranges from 2 to 300 pptg ( 0.24 to 36 kg/1000 liters). Alternatively, the lower threshold of the proportion range may be about 5 pptg (about 0.6 kg/1000 liters), while the upper threshold of proportion of the particles may independently be about 100 pptg (about 12 kg/1000 liters) pptg.

The nano-sized particles herein may be added along with the aqueous treating fluids prior to pumping downhole or other application. The aqueous base fluid could be, for example, water, brine, aqueous-based foams or water-alcohol mixtures. The brine base fluid may be any brine, conventional or to be developed which serves as a suitable media for the various concentrate components. As a matter of convenience, in many cases the brine base fluid may be the brine available at the site used in the completion fluid (for completing a well) or other application, for a non-limiting example.

More specifically, and in non-limiting embodiments, the brines may be prepared using salts including, but not necessarily limited to, NaCl, KCI, CaCl₂, MgCl₂, NH₄Cl, CaBr₂, NaBr₂, sodium formate, potassium formate, and other commonly used stimulation and completion brine salts. The concentration of the salts to prepare the brines may be from about 0.5% by weight of water up to near saturation for a given salt in fresh water, such as 10%, 20%, 30% and higher percent salt by weight of water. The brine may be a combination of one or more of the mentioned salts, such as a brine prepared using NaCl and CaCl₂ or NaCl, CaCl₂, and CaBr₂ as non-limiting examples. In application, the nano-sized particulate additives of MgO (or other particulate) may be mixed with the carrier fluids at the surface before they are pumped downhole.

In another non-limiting embodiment, the nano-sized particles herein may be added to a non-aqueous fluid during a treatment. For example, the MgO nanoparticles can be added to a mineral oil or other hydrocarbon as the carrier fluid and then pumped into place downhole. In one non-limiting example the nanoparticles in a non-aqueous fluid can be a pre-pad fluid stage before a hydraulic frac, frac-pack or gravel pack treatment.

While the fluids herein are sometimes described typically herein as having use in fracturing fluids, it is expected that they will find utility in completion fluids, gravel pack fluids, fluid loss pills, lost circulation pills, diverter fluids, foamed fluids, acidizing fluids, water and/or gas control fluids, enhanced oil recovery (i.e. tertiary recovery) fluids, and the like. In the case where the carrier fluid is an acidizing fluid, it also contains an acid. Other stimulation fluids may have different, known stimulating agents. In the case where the carrier fluid is also a gravel pack fluid, the fluid also contains gravel consistent with industry practice. Fluid loss control pills may also contain a salt or easily removed solid.

The base fluid may also contain other conventional additives common to the well service industry such as water wetting surfactants, non-emulsifiers and the like. In another non-restrictive embodiment, the treatment fluid may contain other additives including, but not necessarily limited to, viscosifying agents, other different surfactants, clay stabilization additives, scale inhibitors, scale dissolvers, polymer and biopolymer degradation additives, defoamers, biocides, and other common and/or optional components.

The invention will be further described with respect to the following Examples which are not meant to limit the invention, but rather to further illustrate the various embodiments.

### EXAMPLES

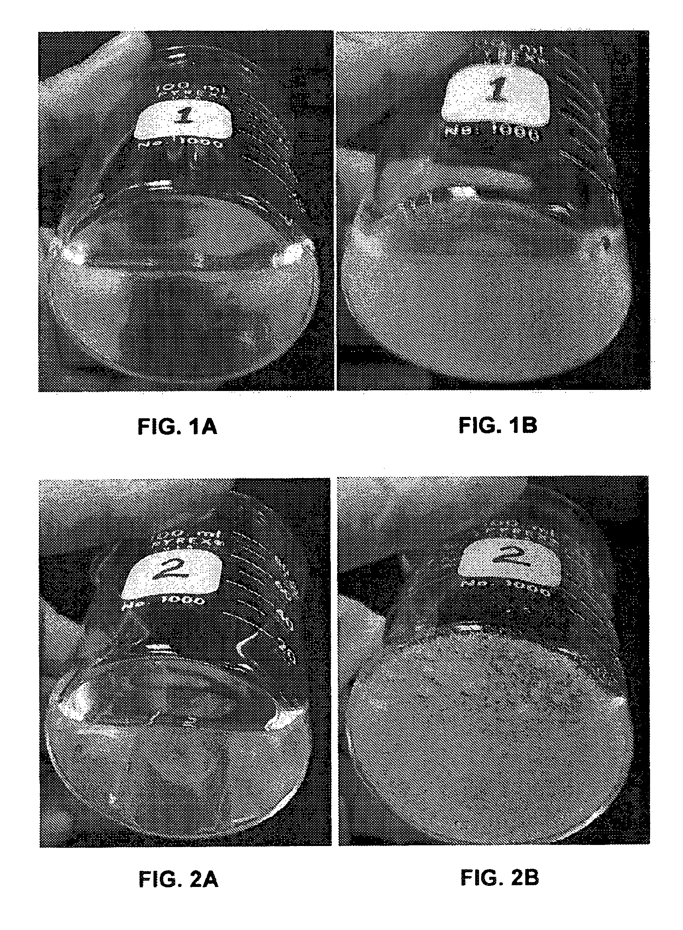

EXAMPLE 1 - This Example is presented as a baseline for comparison with Examples 2, 3 and 4, particularly FIGS. 2A, 3A and 4A which contain only the colloids. Shown in FIG. 1A is a photograph of beaker of tap water without any additive, and its appearance may be seen to be "water white". FIG. 1B is a photograph showing the beaker of tap water of FIG. 1A after the addition of 0.1 %by weight (bw) 35 nanometer (nm) MgO particles. The nano-sized MgO particles are Product #12N-0801 available from Inframat Advanced Materials. It may be seen that the fluid in FIG. 1B has a somewhat milky or hazy appearance.

EXAMPLE 2 - The photograph of FIG. 2A is a photograph of a beaker containing a negatively charged colloidal silica, namely an AM anionic sol available from LUDOX Colloidal Silica, diluted to 50% of its original concentration with tap water. Shown in FIG. 2B is a photograph of the beaker of FIG. 2A containing the negatively charged colloidal silica and 0.1 %bw 35 nm MgO particles (again Product #12N-0801 from Inframat Advanced Materials) showing that the silica was fixated by the nano-sized MgO at the bottom wall of the beaker.

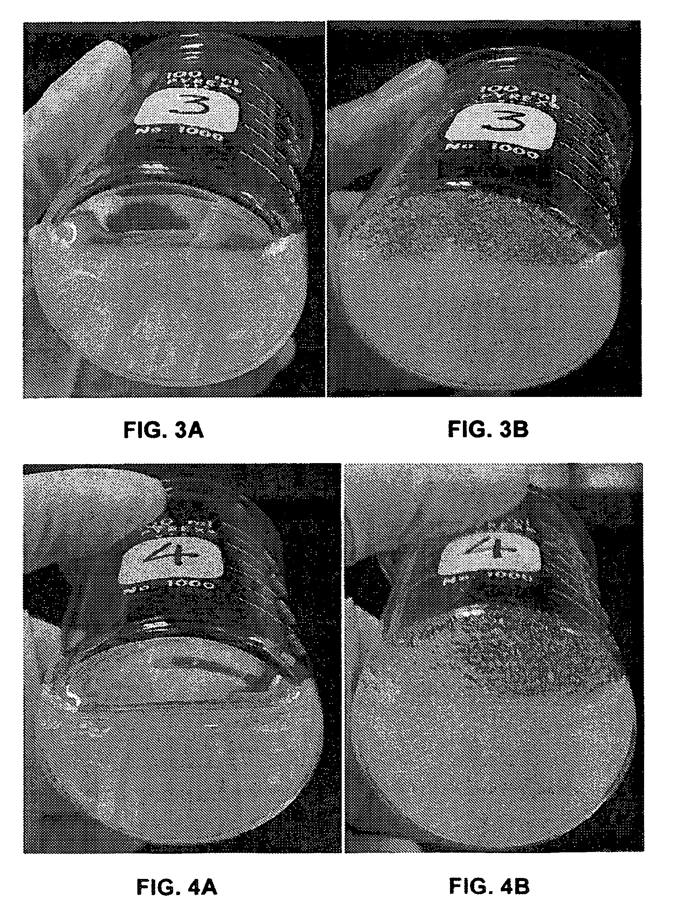

EXAMPLE 3 - The photograph of FIG. 3A is a photograph of a beaker containing a positively charged colloidal silica, namely a CL cationic sol available from LUDOX Colloidal Silica, diluted to 50% of its original concentration with tap water. Shown in FIG. 3B is a photograph of the beaker of FIG. 3A containing the positively charged colloidal silica and 0.1 %bw 35 nm MgO particles (again Product #12N-0801 from Inframat Advanced Materials) showing that the silica was fixated by the nano-sized MgO at the bottom wall of the beaker.

EXAMPLE 4 - The photograph of FIG. 4A is a photograph of a beaker containing a non-charged colloidal silica, namely a TM-50 sol available from LUDOX Colloidal Silica, diluted to 50% of its original concentration with tap water. Shown in FIG. 4B is a photograph of the beaker of FIG. 4A containing the non-charged colloidal silica and 0.1 %bw 35 nm MgO particles (again Product #12N-0801 from Inframat Advanced Materials) showing that the silica was fixated by the nano-sized MgO at the bottom wall of the beaker.

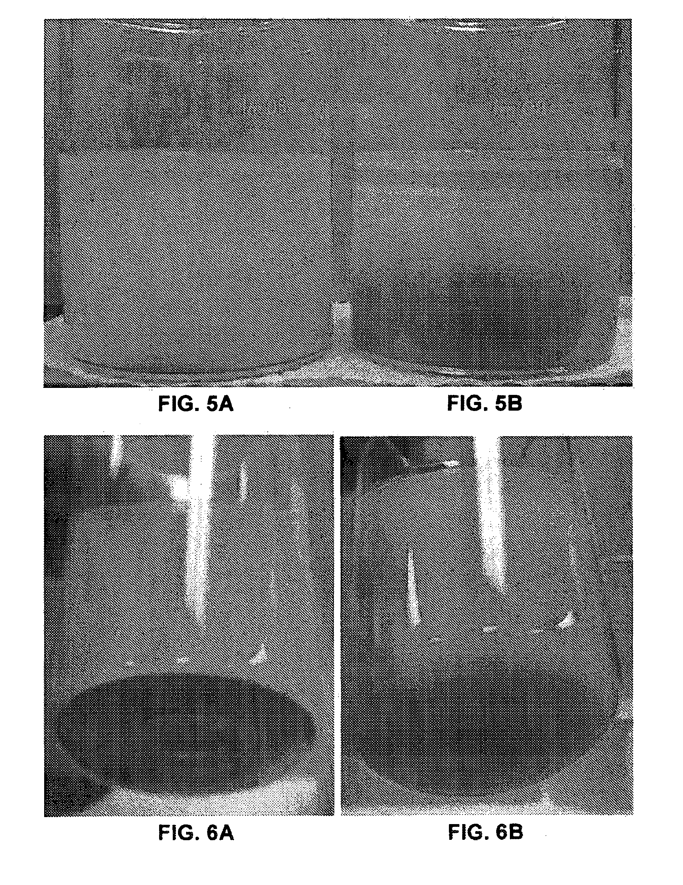

EXAMPLE 5 - In this Example, FIGS. 5A and 6A are photographs of a beaker containing 1.33 %bw natural bentonite particles (MILGEL^{®} NT bentonite available from Baker Hughes Drilling Fluid) dispersed in a beaker after 24 hours of no stirring. The photograph in FIG. 5A was taken from the side and shows small particles like colloidal particles are dispersed in the water. The FIG. 6A photograph was taken of the bottom of the beaker shown in FIG. 5A with the beaker carefully raised to demonstrate that the relatively larger particles have precipitated like a cake at the bottom of the beaker.

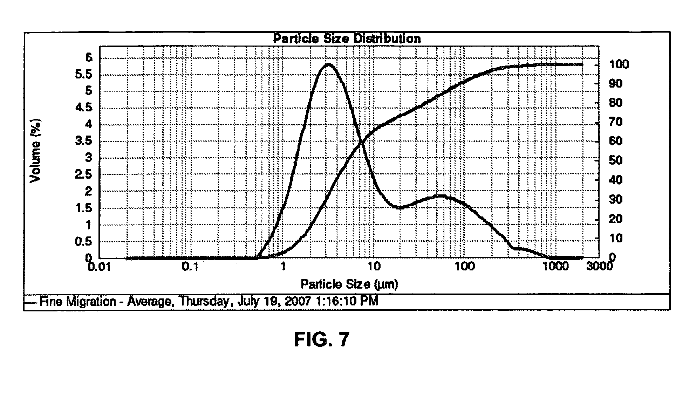

The dispersed particle size distribution (PSD) of the particles in FIGS. 5A and 6A is given in FIG. 7. The central, bimodal curve represents the volume percentage for each given particle size (the left scale in FIG. 7), whereas the other curve, the more gradual increase from left to right, which refers to the right scale, is a measurement from 0% to 100%, representing the accumulation of all particles over this range, having the indicated size or smaller.

FIG. 5B is a photograph of the beaker containing the same fluid composition of FIG. 5A except the addition of 0.1 %bw 35 nm MgO particles (#12N-0801) and after 24 hours of no stirring showing that the small particles are flocculated by the nanoparticles at the water surface. Similarly, FIG. 6B is a photograph of the beaker in the photograph in FIG. 5B after the 0.1 %bw 35 nm MgO particles have been added, again viewed at the bottom from an angle, to show that the larger particles are also flocculated and are kept from precipitating as seen in FIG. 6A. The surface forces, including but not necessarily limited to, van der Waals forces, electrostatic forces and possibly other intermolecular forces, of the nanoparticles may thus flocculate small clay particles into bigger particles, and can attach to bigger clay particles to prevent or inhibit them from precipitating and caking at the bottom of the beaker. It is thus apparent that the nanoparticles of the compositions and methods herein may effectively fixate formation fines to help prevent damage in the near-wellbore region of a hydrocarbon-producing subterranean formation.

The words "comprising" and "comprises" as used throughout the claims is to interpreted "including but not limited to".

## Claims

1. A method for treating a subterranean formation comprising:
introducing into the subterranean formation a treating fluid comprising:
a base fluid, and
from 2 to 300 pptg (0.24 to 36 kg/1000 liters) based on the treating fluid of a particulate additive, the particulate additive
having a mean particle size of 100 nm or less, and being selected from the group consisting of alkaline earth metal oxides, alkaline earth metal hydroxides, alkali metal oxides, alkali metal hydroxides, transition metal oxides, transition metal hydroxides, post-transition metal oxides, post-transition metal hydroxides, piezoelectric crystals, pyroelectric crystals, and mixtures thereof;
associating the particulate additive with fines within the formation; and
reducing migration of fines by fixing them in place.

2. The method of claim 1 where the base fluid is selected from the group consisting of water, brine, oil, alcohol, and mixtures thereof.

3. The method of claim 1 or 2 where the alkaline earth metal is selected from the group consisting of magnesium, calcium, strontium, and barium, where the alkali metal is selected from the group consisting of lithium, sodium, potassium, where the transition metal is selected from the group consisting of titanium and zinc, and where the post-transition metal is aluminum, and mixtures thereof.

4. The method of claim 3 where treating the subterranean formation is selected from the group consisting of
fracturing the formation under effective pressure where the aqueous treating fluid further comprises a proppant;
acidizing the formation where the aqueous treating fluid further comprises an acid;
packing the formation with gravel where the aqueous treating fluid further comprises gravel;
completing a well; and
controlling fluid loss where the aqueous treating fluid further comprises a salt.

5. The method of claim 3 where the mean particle size of the particulate additive is 90 nm or less.

6. A treating fluid comprising a base fluid, and from 2 to 300 pptg (0.24 to 36 kg/1000 liters) based on the treating fluid of a particulate additive, the particulate additive having a mean particle size of 100 nm or less, and being selected from the group consisting of alkaline earth metal oxides, alkaline earth metal hydroxides, alkali metal oxides, alkali metal hydroxides, transition metal oxides, transition metal hydroxides, post-transition metal oxides, post-transition metal hydroxides, piezoelectric crystals, pyroelectric crystals, and mixtures thereof, where the transition metal is selected from the group consisting of titanium and zinc, and where the post-transition metal is selected from the group consisting of gallium, indium, thallium, lead and bismuth.

7. The treating fluid of claim 6 where the base fluid is selected from the group consisting of water, brine, oil, alcohol and mixtures thereof.

8. The treating fluid of claim 6 or 7 where the alkaline earth metal is selected from the group consisting of magnesium, calcium, strontium, and barium, where the alkali metal is selected from the group consisting of lithium, sodium, potassium, and mixtures thereof.

9. The treating fluid of claim 8 where the mean particle size of the additive is 90 nm or less.

10. The treating fluid of claim 8 where the aqueous treating fluid is selected from the group consisting of
a fracturing fluid, where the aqueous treating fluid further comprises a proppant;
an acidizing fluid, where the aqueous treating fluid further comprises an acid;
a gravel packing fluid, where the aqueous treating fluid further comprises gravel;
a stimulation fluid, where the aqueous treating fluid further comprises a stimulating agent;
a completing fluid;
a fluid loss control pill, where the aqueous treating fluid further comprises a salt.

11. The aqueous treating fluid of claim 8 where the mean particle size of the particulate additive is 50 nm or less.

## Patentansprüche

1. Verfahren zum Behandeln einer unterirdischen Formation, umfassend:
Einführen eines sehandlungsfluids, umfassend:
ein Grundfluid und
von 2 bis 300 pptg (0,24 bis 36 kg/1000 Liter), bezogen auf das Behandlungsfluid, eines partikelförmigen Zusatzstoffs, wobei der partikelförmige zusatzstoff
eine mittlere Partikelgröße von 100 nm oder weniger aufweist und
ausgewählt ist aus der Gruppe bestehend aus Erdalkalimetalloxiden, Erdalkalimetallhydroxiden, Alkalimetalloxiden, Alkalimetallhydroxiden, Übergangsmetalloxiden, Übergangsmetallhydroxiden, Postübergangsmetalloxiden, Postübergangsmetallhydroxiden, piezoelektrischen Kristallen, pyroelektrischen Kristallen und Gemischen davon,
in die unterirdische Formation;
Verbinden des partikelförmigen Zusatzstoffs mit Feinmaterial innerhalb der Formation; und
Verringern der Migration von Feinmaterial durch Fixieren davon an seinem Platz.

2. Verfahren gemäß Anspruch 1, wobei das Grundfluid ausgewählt ist aus der Gruppe bestehend aus Wasser, Kochsalzlösung, Öl, Alkohol und Gemischen davon.

3. Verfahren gemäß Anspruch 1 oder 2, wobei das Erdalkalimetall ausgewählt ist aus der Gruppe bestehend aus Magnesium, Calcium, Strontium und Barium, wobei das Alkalimetall ausgewählt ist aus der Gruppe bestehend aus Lithium, Natrium, Kalium, wobei das Übergangsmetall ausgewählt ist aus der Gruppe bestehend aus Titan und zink, und wobei das Postübergangsmetall Aluminium ist, und Gemische davon.

4. Verfahren gemäß Anspruch 3, wobei das Behandeln der unterirdischen Formation ausgewählt ist aus der Gruppe bestehend aus
Aufbrechen der Formation unter wirksamem Druck, wobei das wässrige Behandlungsfluid ferner ein Stützmittel umfasst;
Ansäuern der Formation, wobei das wässrige Behandlungsfluid ferner eine Säure umfasst;
Packen der Formation mit Kies, wobei das wässrige Behandlungsfluid ferner Kies umfasst;
Fertigstellen eines Bohrlochs; und
Beherrschen von Fluidverlust, wobei das wässrige Behandlungsfluid ferner ein Salz umfasst.

5. Verfahren gemäß Anspruch 3, wobei die mittlere Partikelgröße des partikelförmigen Zusatzstoffs 90 nm oder weniger beträgt.

6. Behandlungsfluid, umfassend ein Grundfluid und von 2 bis 300 pptg (0,24 bis 36 kg/1000 Liter), bezogen auf das Behandlungsfluid, eines partikelförmigen Zusatzstoffs, wobei der partikelförmige Zusatzstoff eine mittlere Partikelgröße von 100 nm oder weniger aufweist und ausgewählt ist aus der Gruppe bestehend aus Erdalkalimetalloxiden, Erdalkalimetallhydroxiden, Alkalimetalloxiden, Alkalimetallhydroxiden, Übergangsmetalloxiden, Übergangsmetallhydroxiden, Posttibergangsmetalloxiden, Postübergangsmetallhydroxiden, piezoelektrischen Kristallen, pyroelektrischen Kristallen und Gemischen davon, wobei das Übergangsmetall ausgewählt ist aus der Gruppe bestehend aus Titan und zink, und wobei das Postübergangsmetall ausgewählt ist aus der Gruppe bestehend aus Gallium, Indium, Thallium, Blei und Wismuth.

7. Behandlungsfluid gemäß Anspruch 6, wobei das Grundfluid ausgewählt ist aus der Gruppe bestehend aus Wasser, Kochsalzlösung, Öl, Alkohol und Gemischen davon.

8. Behandlungsfluid gemäß Anspruch 6 oder 7, wobei das Erdalkalimetall ausgewählt ist aus der Gruppe bestehend aus Magnesium, Calcium, Strontium und Barium, wobei das Alkalimetall ausgewählt ist aus der Gruppe bestehend aus Lithium, Natrium, Kalium, und Gemischen davon.

9. Behandlungsfluid gemäß Anspruch 8, wobei die mittlere Partikelgröße des zusatzstoffs 90 nm oder weniger beträgt.

10. Behandlungsfluid gemäß Anspruch 8, wobei das wässrige Behandlungsfluid ausgewählt ist aus der Gruppe bestehend aus
einem Aufbrechfluid, wobei das wässrige Behandlungsfluid ferner ein Stützmittel umfasst;
einem Säuerungsfluid, wobei das wässrige Behandlungsfluid ferner eine Säure umfasst;
einem Kiespackfluid, wobei das wässrige Behandlungsfluid ferner Kies umfasst;
einem Stimulationsfluid, wobei das wässrige Behandlungsfluid ferner ein Stimulationsmittel umfasst;
einem Fertigstellungsfluid; und
einem Fluidverlust-Beherrschungsmittel, wobei das wässrige Behandlungsfluid ferner ein Salz umfasst.

11. Wässriges Behandlungsfluid gemäß Anspruch 8, wobei die mittlere Partikelgröße des partikelförmigen Zusatzstoffs 50 nm oder weniger beträgt.

## Revendications

1. Procédé de traitement d'une formation souterraine, comprenant :
l'introduction dans la formation souterraine d'un fluide de traitement comprenant :
un fluide de base, et
de 2 à 300 pptg (0,24 à 36 kg/1000 litres), rapporté au fluide de traitement, d'un additif particulaire,
l'additif particulaire ayant une taille moyenne de particules de 100 nm ou moins, et étant choisi dans le groupe constitué par les oxydes de métaux alcalino-terreux, les hydroxydes de métaux alcalino-terreux, les oxydes de métaux alcalins, les hydroxydes de métaux alcalins, les oxydes de métaux de transition, les hydroxydes de métaux de transition, les oxydes de métaux post-transition, les hydroxydes de métaux post-transition, les cristaux piézoélectriques, les cristaux pyroélectriques, et les mélanges de ceux-ci ;
l'association de l'additif particulaire avec des fines à l'intérieur de la formation ; et
la réduction de la migration des fines par leur fixation en place.

2. Procédé selon la revendication 1 dans lequel le fluide de base est choisi dans le groupe constitué par l'eau, la saumure, une huile, un alcool, et les mélanges de ceux-ci.

3. Procédé selon la revendication 1 ou 2 dans lequel le métal alcalino-terreux est choisi dans le groupe constitué par le magnésium, le calcium, le strontium et le baryum, dans lequel le métal alcalin est choisi dans le groupe constitué par le lithium, le sodium et le potassium, dans lequel le métal de transition est choisi dans le groupe constitué par le titane et le zinc, et dans lequel le métal post-transition est l'aluminium, et les mélanges de ceux-ci.

4. Procédé selon la revendication 3 dans lequel le traitement de la formation souterraine est choisi dans le groupe constitué par
la fracturation de la formation sous une pression efficace, le fluide de traitement aqueux comprenant en outre un agent de soutènement ;
l'acidification de la formation, le fluide de traitement aqueux comprenant en outre un acide;
le remplissage de la formation avec du gravier, le fluide de traitement aqueux comprenant en outre du gravier ;
la complétion d'un puits ; et
le contrôle de la perte de fluide, le fluide de traitement aqueux comprenant en outre un sel.

5. Procédé selon la revendication 3 dans lequel la taille moyenne de particules de l'additif particulaire est de 90 nm ou moins.

6. Fluide de traitement comprenant un fluide de base, et de 2 à 300 pptg (0,24 à 36 kg/1000 litres), rapporté au fluide de traitement, d'un additif particulaire, l'additif particulaire ayant une taille moyenne de particules de 100 nm ou moins, et étant choisi dans le groupe constitué par les oxydes de métaux alcalino-terreux, les hydroxydes de métaux alcalino-terreux, les oxydes de métaux alcalins, les hydroxydes de métaux alcalins, les oxydes de métaux de transition, les hydroxydes de métaux de transition, les oxydes de métaux post-transition, les hydroxydes de métaux post-transition, les cristaux piézoélectriques, les cristaux pyroélectriques et les mélanges de ceux-ci, le métal de transition étant choisi dans le groupe constitué par le titane et le zinc, et le métal post-transition étant choisi dans le groupe constitué par le gallium, l'indium, le thallium, le plomb et le bismuth.

7. Fluide de traitement selon la revendication 6 dans lequel le fluide de base est choisi dans le groupe constitué par l'eau, la saumure, une huile, un alcool, et les mélanges de ceux-ci.

8. Fluide de traitement selon la revendication 6 ou 7 dans lequel le métal alcalino-terreux est choisi dans le groupe constitué par le magnésium, le calcium, le strontium et le baryum, et dans lequel le métal alcalin est choisi dans le groupe constitué par le lithium, le sodium et le potassium, et les mélanges de ceux-ci.

9. Fluide de traitement selon la revendication 8 dans lequel la taille moyenne de particules de l'additif est de 90 nm ou moins.

10. Fluide de traitement selon la revendication 8, le fluide de traitement aqueux étant choisi dans le groupe constitué par
un fluide de fracturation, le fluide de traitement aqueux comprenant en outre un agent de soutènement ;
un fluide acidifiant, le fluide de traitement aqueux comprenant en outre un acide;
un fluide de remplissage de gravier, le fluide de traitement aqueux comprenant en outre du gravier ;
un fluide de stimulation, le fluide de traitement aqueux comprenant en outre un agent stimulant;
un fluide de complétion ; et
une pilule de contrôle de perte de fluide, le fluide de traitement aqueux comprenant en outre un sel.

11. Fluide de traitement aqueux selon la revendication 8 dans lequel la taille moyenne de particules de l'additif particulaire est de 50 nm ou moins.
